# EUROPÄISCHE PATENTSCHRIFT

(11) **EP 2 085 445 B1**
(45) Veröffentlichungstag und Bekanntmachung des Hinweises auf die Patenterteilung: **23.03.2016**
(21) Anmeldenummer: 09150192.4
(22) Anmeldetag: 08.01.2009
(51) Int. Cl.: B32B 7/06, B32B 7/12, B32B 27/08, B32B 27/16, B32B 27/18, B32B 27/28, B32B 27/30, B32B 27/32, C09J 7/02

(54) **Verwendung eines Liners**
Use of a liner
Utilisation d'une feuille antiadhésive

(30) Priorität: 22.01.2008 DE 102008005560
(43) Veröffentlichungstag der Anmeldung: 05.08.2009
(73) Patentinhaber: tesa SE, 22848 Norderstedt (DE)
(72) Erfinder: MICHEL, Uwe, 10317 Berlin (DE); MÜSSIG, Dr. Bernhard, 21218 Seevetal (DE)

(56) Entgegenhaltungen:
- EP-A- 0 962 315
- EP-A- 1 967 563
- WO-A-2008/077883
- WO-A1-95/15850
- WO-A1-97/33941
- US-B1- 6 521 312
- "STANDARD TEST METHODS FOR FLEXURAL PROPERTIES OF UNREINFORCED AND REINFORCED PLASTICS AND ELECTRICAL INSULATING MATERIALS" ASTM INTERNATIONAL STANDARD, ASTM INTERNATIONAL, US, Bd. D790-03, 1. Januar 2003 (2003-01-01), Seiten 1-11, XP001248019
- "DIN EN ISO 3146:2002-06 Kunststoffe - Bestimmung des Schmelzverhaltens (Schmelztemperatur oder Schmelzbereich) von teilkristallinen Polymeren im Kapillarrohr- und Polarisationsmikroskop-Verfahren // Plastics - Determination of melting behaviour (melting temperature or melting range) of semi-crystall", DEUTSCHE NORMEN. DIN NORM,, vol. EN-ISO-3146, 1 February 2002 (2002-02-01), page 7pp, XP009129420,

## Beschreibung

Die Erfindung betrifft die Verwendung eines Liners.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln auf ein Abdeckmaterial aufgebracht, das zusammen mit dem Klebeband aufgewickelt wird. Dem Fachmann sind derartige Abdeckmaterialien unter den Namen Liner bekannt. Neben der Abdeckung von ein- oder doppelseitig klebenden Klebebändern werden Liner auch zur Eindeckung von Etiketten eingesetzt.

In der Regel handelt es sich bei Linern um Trennpapiere (Papiere mit ein- oder beidseitiger Silikonbeschichtung). In geringem Umfang werden auch Polyester-, Polypropylen- und Polyethylenfolien mit Silikonbeschichtung eingesetzt. Liner auf Folienbasis werden von dem Fachmann für selbstklebende Produkte als Trennfolien bezeichnet.

Die Folien für solche Liner aus Polyolefin werden durch Blas- oder Flachfolienextrusion hergestellt. Liner dienen dem Herstellprozess (Beschichtung von Haftklebstoff, Trocknung, Übertragung des trockenen Klebstoffs auf ein Substrat und Entfernung des Liners). Der Liner kann auch zur Lagerung (zum Beispiel bei doppelseitigen Klebebändern) oder zur Weiterverarbeitung (zum Beispiel bei Etiketten) dienen. Der Liner deckt die Haftklebstoffschicht ab und wird vor dem Verkleben in der Applikation entfernt. Hierfür ist es vorteilhaft, wenn der Liner eine hohe Steifigkeit aufweist. Bei schmalen doppelseitig klebenden Klebebändern (zum Beispiel in einer Breite von 5 mm) dient der Liner auch als Schutz gegen Überdehnung bei der Applikation, damit sich das Klebeband im verklebten Zustand nicht wieder durch Rückschrumpf ablöst. Trennpapiere weisen diesbezüglich exzellente Eigenschaften auf, sie sind allerdings bei Feuchtigkeitsschwankungen nicht dimensionsstabil. Weiterhin haften nach dem Stanzvorgang an den Schneidkanten des Klebebandes aus dem Trennpaper stammende Papierfasern, was für Hygiene- und Elektronikanwendungen des Stanzlings, zum Beispiele Stanzlinge zur Montage von Flachbildschirmen oder Möbiltelefonen, nicht akzeptabel ist.

Polyesterfolien sind praktisch nur in farblos erhältlich, dadurch kann der Endanwender den Liner schwer erkennen. Liner aus extrudierten Polyolefinfolien sind weich und flexibel, sie werden daher für die Applikation von Haftklebeprodukten auf unebenen Oberflächen eingesetzt. Nachteiligerweise besitzen sie einen geringen Zugmodul und können daher weder zur direkten Beschichtung mit Klebstoff noch zur Eindeckung von schmalen Klebebändern verwendet werden.

Liner dienen der Abdeckung einer Haftklebemasseschicht bis zu deren Verklebung im Anwendungsfall, ein Liner ist also ein Hilfsmittel der nach seiner Entfernung von der Haftklebemasseschicht entsorgt werden muss. Das gleiche gilt für eine Trennfolie welche ein Spezialfall eines Liners darstellt (wenn das Release auf einer Folie aufgetragen ist). Träger sind grundsätzlich von Linern zu unterscheiden, da Träger ein permanenter Bestandteil eines Klebebandes oder Etikettes sind. Träger sind immer fest mit Haftklebemassenschicht verbunden (direkt oder durch einen Haftvermittler auch Primer genannt). Analoges gilt auch für die Unterscheidung zwischen einer Trennfolie und einem Folienklebebandträger.

Aus der WO 95/15850 A1 ist eine Folie bekannt, die ein Substrat umfaßt, das auf wenigstens einer Seite davon) eine Beschichtung aus einem Silikon-Trennmaterial aufweist. Das Substrat ist ein orientiertes Polypropylen mit hoher Kristallinität (HCPP), das eine größere intermolekulare Stereoregularität, gemessen durch TR-Spektroskopie, als 93 % aufweist.

Aufgabe der Erfindung ist es, einen Liner zur Verfügung zu stellen, der die genannten Nachteile von Trennpapieren nicht aufweist, der in Längsrichtung einen hohen Zugmodul aufweist und der auch eingefärbt herstellbar ist.

Gelöst wird diese Aufgabe durch die Verwendung eines Liners, wie er im Hauptanspruch näher gekennzeichnet ist. In den Unteransprüchen sind vorteilhafte Ausführungsformen der Erfindung beschrieben.

Demgemäß betrifft die Erfindung die Verwendung eines Liners zur Eindeckung der Klebeschicht eines ein- oder doppelseitig klebenden Klebebands, Klebebandstanzlings oder Etiketts aus einer Folie, die ein in Längsrichtung mit einem Reckverhältnis von mindestens 1:8 verstrecktes Polypropylen mit einem Biegemodul von mindestens 1400, vorzugsweise mindestens 2000 MPa enthält, wobei auf mindestens einer der beiden außen liegenden Seiten der Folie eine Releasebeschichtung aufgebracht ist.

Zur Erzielung von hohen Zugfestigkeiten, von hohen Spannungen bei 1 %- und 10 %-Dehnung und von hohem Weiterreißwiderstand sollten die Reckprozessbedingungen so gewählt werden, dass das Reckverhältnis das für Folie jeweils maximal technisch durchführbare ist. Erfindungsgemäß liegt das Reckverhältnis in Längsrichtung bei mindestens 1:8, vorzugsweise bei mindestens 1:9,5.

Ein Reckverhältnis von zum Beispiel 1:6 gibt an, dass aus einem Abschnitt der Primärfolie von 1 m Länge ein Abschnitt von 6 m Länge der gereckten Folie entsteht. Oft wird das Reckverhältnis auch als Quotient der Liniengeschwindigkeit vor der Verstreckung und der Liniengeschwindigkeit nach der Verstreckung bezeichnet.

Um weiterhin möglichst hohe Werte von Spannungen bei 1 %- und 10 %-Dehnung, Zugfestigkeit und Weiterreißwiderstand zu erreichen, ist die Verwendung von Nucleierungsmittel vorteilhaft. Es kommen alle für Polypropylen geeigneten Nucleierungsmittel (α- oder β-Kristalle) in Frage.

Dies sind organische Nucleierungsmittel wie zum Beispiel Benzoate, Phosphate oder Sorbitolderivate. Derartige Nucleierungsmittel werden zum Beispiel im Kapitel "9.1. Nucleating Agents" in Ullmann's Encyclopedia of Industrial Chemistry (Auflage 2002 vom Wiley-VCH Verlag, Article Online Posting Date June 15, 2000) oder in den Beispielen der US 2003/195300 A1 beschrieben. Eine weitere besonders geeignete Methode ist die Verwendung eines semikristallinen verzweigten oder gekuppelten polymeren Nucleierungsmittel, wie es in US 2003/195300 A1 beschrieben ist, zum Beispiel ein mit 4,4'-Oxydibenzolsulfonylazid modifiziertes Polypropylen.

Monoaxial verstreckte Polypropylenfolien aus PP-Copolymeren mit einem Biegemodul von 1100 bis 1300 MPa oder aus Mischungen von PP-Homopolymeren und Polyethylen sind matt und trübe. Zwar ist dem Fachmann bekannt, dass Nucleierungsmittel die Transparenz von unverstreckten Artikeln aus Polypropylen verbessern kann, überraschenderweise ist eine verstreckte Folie aus dem erfindungsgemäßen Polypropylen bei homogener Verteilung des Nucleierungsmittels glasklar und bei inhomogener Verteilung perlmuttartig weiß ist. Letzteres kann am einfachsten durch Extrusion einer Mischung von Granulaten von nicht-nucleiertem Polypropylen mit homogen nucleiertem Polypropylen realisiert werden, dabei ist eine Verstreckung zur Erreichung des Effektes zwingend notwendig.

In einer weiteren bevorzugten Ausführungsform der Erfindung besitzt der Liner in Längsrichtung (Maschinenrichtung) eine Spannung bei 1 %-Dehnung von mindestens 20, vorzugsweise mindestens 40 N/mm² und/oder eine Spannung bei 10 %-Dehnung von mindestens 250, vorzugsweise mindestens 300 N/mm². Die Zugfestigkeit beträgt gemäß einer weiteren bevorzugten Ausführungsform mindestens 300, vorzugsweise mindestens 330 N/mm² und/oder der Weiterreißwiderstand in Querrichtung mindestens 80, insbesondere mindestens 220 N/mm.

Zur Berechnung von Festigkeitswerten werden die breitenbezogenen Kraftwerte durch die Dicke geteilt. Die Dicke der Folie liegt vorzugsweise zwischen 25 und 200 µm, besonders bevorzugt zwischen 40 und 140 µm, ganz besonders bevorzugt zwischen 50 und 90 µm.

Die Folie für den Liner kann analog dem relativ einfachen Extrusionsverfahren für monoaxial verstreckte Polypropylen-Folien hergestellt werden. Solche Folien werden als Trägermaterial für Aufreißstreifen oder Strapping Tapes eingesetzt. Sie werden aus PP-Copolymeren mit einem Biegemodul von 1100 bis 1300 MPa oder aus Mischungen von PP-Homopolymeren und Polyethylen hergestellt, um der Trägerfolie hohe Längsfestigkeit, aber auch hohe Zähigkeit zu verleihen. Das Reckverhältnis beträgt üblicherweise 1:6. Diese Trägerfolien werden einseitig mit einem Haftklebstoff, vorzugsweise unter Verwendung eines Primers, beschichtet.

Ein Liner hingegen ist nicht Bestandteil eines Klebebandes oder Etiketts, sondern nur ein Hilfsmittel für deren Herstellung, Lagerung oder für die Weiterverarbeitung durch Stanzen. Darüber hinaus wird ein Liner im Gegensatz zu einem Träger nicht fest mit einer Klebstoffschicht verbunden. Der Liner unterscheidet sich nicht nur durch den Verwendungszweck von einer monoaxial verstreckten Polypropylen-Trägerfolie, sondern auch durch die Härte (ausgedrückt als Biegemodul) des Polypropylen-Rohstoffs. Die erfindungsgemäße Folie wird aus Polypropylen mit einem Biegemodul von mindestens 1400 vorzugsweise mindestens 2000 MPa gefertigt und wird zudem stärker verstreckt.

Gemäß einer weiteren vorteilhaften Ausführungsform ist auf beiden außen liegenden Seiten der Folie je eine Releasebeschichtung aufgebracht, wobei die Releasebeschichtungen vorzugsweise unterschiedliche Trennkräfte zu einer Klebstoffschicht aufweisen.

Geeignete PP-Folienrohstoffe für die Folie des Liners sind kommerziell erhältliche Polypropylenhomopolymere oder Polypropylencopolymere. Vorzugsweise werden für den erfindungsgemäßen Gegenstand Polypropylenhomopolymere verwendet.

Die Schmelzindizes der genannten Polymere müssen im für Flachfolienextrusion geeigneten Bereich liegen. Dieser Bereich sollte zwischen 0,3 und 15 g/10min, vorzugsweise im Bereich von 0,8 und 5 g/10min (gemessen bei 230 °C/2,16kg) liegen. Das Polypropylen ist vorzugsweise überwiegend isotaktisch aufgebaut.

Die Folie kann weitere Polymere enthalten, zum Beispiel Polyethylen einschließlich Ethylencopolymere wie EVA oder PE-LLD oder nichterfindungsgemäße Polypropylene einschließlich der Polypropylen-Copolymeren mit Ethylen oder Butylen.

Die Polymere können in Reinform oder in Abmischung mit Additiven wie Antioxidantien, Lichtschutz-, Antiblock-, Gleit- und Verarbeitungshilfsmittel, Füllstoffe, Farbstoffe, Pigmente, Treib- oder Nucleierungsmittel in Liefer- oder Batchform enthalten, soweit diese nicht die Aushärtung einer Silikonschicht negativ beeinflussen.

Die Folie ist vorzugsweise farbig.

Bei der Beschichtung mit einem lösungsmittelhaltigen Release kann die Folie verspröden. Durch Reiben können Fasern aus der Oberfläche herausgelöst werden. Gemäß einer weiteren vorteilhaften Ausführungsform der Erfindung weist die Folie daher auf mindestens einer der beiden außen liegenden Seiten eine Coextrusionsschicht aus einem Polypropylenpolymer oder einem ethylenhaltigen Polymer mit einem Kristallitschmelzpunkt von unter 150 °C, vorzugsweise unter 140 °C auf, wobei gegebenenfalls die Coextrusionsschicht zwischen der Folie und der Releasebeschichtung angeordnet ist.

Der Anteil solcher Polymere mit geringerer Kristallinität (damit in der Regel verbunden auch geringerem Kristallitschmelzpunkt) liegt vorzugsweise bei mindesten 50 Gew.-%. Beispiele sind PP-Randomcopolymere, PP-Terpolymere, PP-Plastomere (zum Beispiel Vistamaxx® oder Versify®, PE-Plastomere (zum Beispiel Exact® oder Tafmer®), EPM, EPDM, PE-LD, PE-VLD oder PE-LLD.

Enthält das Polymer der Coextrusionsschicht keinen oder einen geringen Anteil an Propylen wird es zur Verbesserung der Haftung zwischen Folie und Coextrusionsschicht vorzugsweise mit einem polypropylenhaltigen Polymer, insbesondere der Hauptkomponente der Folie, abgemischt, vorzugsweise liegt der Anteil bei mindesten 20 Gew.-%.

Gemäß einer weiteren vorteilhaften Variante der Erfindung weist die Folie auf mindestens einer der beiden außen liegenden Seiten eine Coextrusionsschicht aus einem Polypropylenpolymer mit einen Gehalt an olefinischem Comonomer von weniger als 2,5 Gew.-%, vorzugsweise 0 Gew.-% auf, wobei vorzugsweise die Coextrusionsschicht frei von Nucleierungsmittel ist und wobei gegebenenfalls die Coextrusionsschicht zwischen der Folie und der Releasebeschichtung angeordnet ist

Überraschenderweise sind für eine solche Coextrusionsschicht trotz hoher Kristallinität auch Polypropylenpolymere einen Gehalt an olefinischem Comonomer von weniger als 2,5 Gew.-%, vorzugsweise 0 Gew.-% (letzteres bedeutet, dass ein Polypropylenhomopolymer vorliegt) geeignet, insbesondere wenn die Coextrusionsschicht frei von Nucleierungsmittel ist.

Die Dicke der Coextrusionsschicht(en) beträgt maximal 20 %, vorzugsweise maximal 10 % der Gesamtfoliendicke.

Der Liner ist auf der außen liegenden Seite der Coextrusionsschicht mit einer Releasebeschichtung (Antihaftbeschichtung) ausgerüstet.

Gemäß einer weiteren vorteilhaften Ausführungsform der Erfindung kann auf beiden außen liegenden Seiten des Trägers je eine Releasebeschichtung aufgebracht sein. Releasebeschichtungen können aus Silikonen, Acrylaten (zum Beispiel Primal® 205), Stearylverbindungen wie Polyvinylstearylcarbamat oder Chromstearatomplexen (zum Beispiel Quilon® C), Umsetzungsprodukten aus Maleinsäureanhydridcopolymeren und Stearylamin oder Umsetzungsprodukten aus Polyvinylakohol und Stearylisocyanat bestehen.

Bevorzugt wird eine Releasebeschichtung auf Silikonbasis. Das Silikon kann lösungsmittelfrei (100 %ig oder als Dispersion) oder lösungsmittelhaltig aufgetragen werden und durch Strahlen, thermisch zum Beispiel über eine Kondensations-, Additions- oder radikalische Reaktion oder physikalisch (zum Beispiel durch eine Blockstruktur) vernetzt sein.

Gegebenenfalls kann die Releasebeschichtung auch durch Coextrusion aufgetragen sein (zum Beispiel mit einer Außenschicht enthaltend Polyvinylstearylcarbamat oder silikongepfropftes Polyethylen).

Vorzugsweise sind beidseitig auf der Folie des Liners Silikonschichten aufgebracht, welche besonders bevorzugt unterschiedliche Trennkräfte zu einer Klebstoffschicht aufweisen.

Zur Vermeidung von negativen Einflüssen der Releasebeschichtung auf die mechanischen Eigenschaften der Folie werden lösungsmittelfreie Silikone mit thermischer oder strahleninduzierter Vernetzung besonders bevorzugt, insbesondere Vinylpolydimethylsiloxane. Diese werden vorzugsweise mit Methylhydrogensiloxanen in Gegenwart eines Platin- oder Rhodium-Katalysators oder durch EB-/UV-Strahlung vernetzt.

Verwendbar dafür ist zum Beispiel das auf dem Markt erhältliche additionsvernetzende Silikon-Release-System "Dehesive 940A" der Wacker-Chemie mit einem zugehörigen Katalysatorsystem, das im unvernetzten Zustand aufgetragen wird und dann nachträglich im aufgetragenen Zustand vernetzt.

Als vernetzbares Silikon können die üblicherweise zur Trennbeschichtung verwendeten Silikonsysteme eingesetzt werden. Dazu zählen Mischungen aus Vernetzungskatalysatoren und so genannten thermisch härtbaren kondensations- oder additionsvernetzende Siloxanen. Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der EP 0 378 420 A1 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungskatalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte Kohlenwasserstoffreste direkt an den Siliciumatomen gebunden aufweisen und in Gegenwart eines Photosensibilisators vernetzt werden (siehe EP 0 168 713 B1, DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte Kohlenwasserstoffreste direkt an den Siliciumatomen gebunden aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Thermisch härtende Trennbeschichtungen sind häufig Mehrkomponentensysteme, welche typischerweise aus folgenden Komponenten bestehen:
a) Einem linearen oder verzweigten Dimethylpolysiloxan, welches aus ca. 80 bis 200 Dimethylpolysiloxan-Einheiten besteht und an den Kettenenden mit Vinyldimethylsiloxy-Einheiten abgestoppt ist. Typische Vertreter sind zum Beispiel lösungsmittelfreies, additionsvernetzendes Silikonöl mit endständigen Vinylgruppen, wie DEHESIVE® 921 oder 610, beide kommerziell erhältlich bei Wacker-Chemie GmbH.
b) Einem linearen oder verzweigten Vernetzer, welcher üblicherweise aus Methylhydrogensiloxy- und Dimethylsiloxy-Einheiten zusammengesetzt ist, wobei die Kettenenden entweder mit Trimethylsiloxy-Gruppen oder Dimethylhydrogensiloxy-Gruppen abgesättigt sind. Typische Vertreter dieser Produktklasse sind zum Beispiel Hydrogenpolysiloxane mit hohem Gehalt an reaktivem Si-H wie die Vernetzer V24, V90 oder V06, welche bei Wacker-Chemie GmbH kommerziell erhältlich sind.
c) Einem Silikon-MQ-Harz, welches als M-Einheit neben den üblicherweise verwendeten Trimethylsiloxy-Einheiten auch über Vinyldimethylsiloxy-Einheiten verfügt. Typische Vertreter dieser Gruppe sind zum Beispiel die Trennkraftregler CRA® 17 oder CRA® 42, kommerziell erhältlich bei Wacker-Chemie GmbH.
d) Einem silikonlöslichen Platinkatalysator wie zum Beispiel einem Platindivinyltetramethyldisiloxan-Komplex, welcher üblicherweise als Karstedt-Komplex bezeichnet wird und beispielsweise unter der Bezeichnung Katalysator OL bei Wacker-Chemie GmbH kommerziell erhältlich ist.

Bei den erfindungsgemäß verwendeten Silikonen, vorzugsweise Silikonölen, handelt es sich um polydisperse Gemische unterschiedlich langer und unterschiedlich substituierter, linearer oder cyclischer Siloxanketten. Die Gemische entstehen in katalysierten Syntheseprozessen. Die Polysiloxane bestehen aus alternierenden Atomen von Silicium und Sauerstoff, so dass das charakteristische Merkmal die Si-O-Si-(= Siloxan-) Bindung im Molekülverband ist. An den beiden freibleibenden Valenzen des Siliciums sind verschiedene Substituenten möglich.

Chemisch korrekt bezeichnet sind die behandelten Silikonöle also Polydimethylsiloxane, die im Allgemeinen als PDMS abgekürzt werden. Sie werden durch nachstehende Formel charakterisiert:

### Struktur von linearen (links) und cyclischen Polydimethylsiloxanen (rechts)

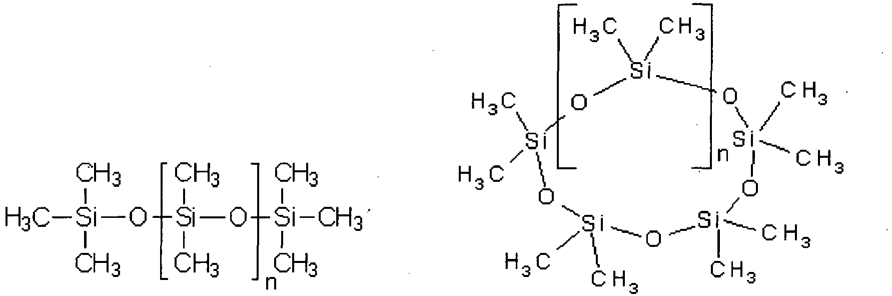

Die Reste am Silicium können auch mit weiteren Siloxanbindungen abgesättigt sein; auf diese Weise kommt man zu verzweigten und vernetzten Silikonen. Erstere bilden dann die Silikonharze, letztere die Silikonelastomere.

Je nach Funktionalität der Siliciumgruppe (mono-, di-, tri- oder tetrafunktionell) hat man die symbolischen Schreibweisen M, D, T und Q eingeführt:
- [M] = R₃SiO_{1/2}
- [D] = R₂SiO_{2/2}
- [T] = RSiO_{3/2}
- [Q] = SiO_{4/2}

Man kann die folgenden Gruppen unterscheiden:
- lineare Polysiloxane: sind kettenförmig aus difunktionellen Siloxaneinheiten aufgebaut und enthalten monofunktionelle Endgruppen; Bautyp [MDₙM] od. R₃SiO[R₂SiO]ₙ SiR₃,
   im Formelbild (R=CH₃).
- verzweigte Polysiloxane: sind ring- oder kettenförmig aus di-, tri- oder tetrafunktionellen Siloxan-Einheiten aufgebaut; Bautyp [MₙDₘTₙ].
- cyclische Polysiloxane: sind ringförmig aus difunktionellen Siloxan-Einheiten aufgebaut; Bautyp [Dₙ].
- vernetzte Polymere: sind ketten- oder ringförmige Moleküle, die mit Hilfe von T- und Q-Einheiten zu zwei- oder dreidimensionalen Netzwerken verknüpft sind.

Die mit einer Releasebeschichtung zu versehende Folienseite wird zur besseren Haftung der Releasebeschichtung vorzugsweise an der Oberfläche vorbehandelt. Dies können chemische Beschichtungen oder Behandlungen aus der Gasphase (zum Beispiel fluorhaltige Gase) oder physikalische Prozesse wie Fluor-, Flamm- oder Plasma- und insbesondere Coronabehandlung sein, gegebenenfalls ist auch mechanische Vorbehandlung (Prägung) möglich.

Aufgrund der hervorragenden Eigenschaften des Liners lässt sich dieser zur Eindeckung der Klebeschicht eines ein- oder doppelseitig klebenden Klebebands, Klebebandstanzlings oder Etiketts verwenden, insbesondere wenn die Klebeschichtung auf Acrylatbasis ist.

Das ein- oder doppelseitig klebende Klebeband, die Klebebandstanzlinge oder Etiketten. können zusätzlich einen Träger enthalten, zum Beispiel ein Tissue, eine Folie, ein Gewebe, ein Polyolefinschaum oder ein Vlies. Vorzugsweise ist das Klebeband doppelseitig klebend und enthält vorzugsweise einen Träger aus dünnen Papier (Tissue), Vlies, Schaumstoff oder Folie. Die Folien können zum Beispiel biaxial verstrecktes Polyester-.oder Polypropylenfolien sein.

In einer weiteren vorteilhaften Verwendung des Liners deckt dieser ein doppelseitig klebendes Klebeband ein, welches in einem Stanzverfahren zu Stanzlingen verarbeitet wird.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Des Weiteren kann der Liner beidseitig mit jeweils einer Klebebeschichtung gleicher oder unterschiedlicher Zusammensetzung ausgerüstet werden.

Die Beschichtungsstärke mit Klebemasse liegt je Seite vorzugsweise im Bereich von 18 bis 200 g/m², insbesondere 40 bis 120 g/m².

Geeignete Haftkleber sind bei D. Satas, Handbook of Pressure Sensitive Adhesive Technology (Van Nostrand Reinhold) beschrieben. Insbesondere sind Haftkleber auf Basis Acrylat, Naturkautschuk, thermoplastischem Styrolblockcopolymer, Polyisobutylen oder Silikon geeignet. Bevorzugt sind Acrylathaftkleber, sie können als Dispersion, Hotmelt oder Lösung aufgetragen sein. Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Klebstoffschicht kann durch Wärme oder energiereiche Strahlen vernetzt sein.

Der Liner weist in Längsrichtung einen hohen Zugmodul auf, so dass schmale Klebebänder nicht bei der Applikation überdehnt werden können. Weiterhin kann er auch eingefärbt hergestellt werden. Der Liner weist eine hinreichende Temperaturbeständigkeit auf, um darauf aufgetragene Klebstoffbeschichten trocknen zu können. Der Liner hat einen hohen Weiterreißwiderstand in Querrichtung, so dass er bei Kantenverletzung nicht leicht abreißt, wie es bei einer normalen verstreckten Folie zum Beispiel aus Polypropylen oder Polyester der Fall ist.

Alle erwähnten Parameter werden nach folgenden Prüfmethoden bestimmt:
Dicke: DIN 53370
Zugfestigkeit: DIN 53455-7-5 in Längsrichtung
Spannung 1 %- beziehungsweise 10 %-Dehnung: DIN 53455-7-5 in Längsrichtung
Bruchdehnung: DIN 53455-7-5 in Längsrichtung
Schmelzindex: DIN 53735
   - Der Schmelzindex "Melt Flow Ratio" (MFR) wird gemäß DIN 53735 gemessen. Für Polyethylene werden Schmelzindices meistens angegeben in g/10 min bei 190 °C und einem Gewicht von 2,16 kg, für Polypropylene entsprechend, allerdings bei einer Temperatur von 230 °C.
Biegemodul (Flexural Modulus) ASTM D 790 A
Dichte: ASTM D 792
Kristallitschmelzpunkt: Bestimmung durch DSC nach ISO 3146 oder MTM 15902 (Basell-Methode)

Im Folgenden soll die Erfindung anhand von Beispielen erläutert werden, ohne diese dadurch einzuschränken.

### Beispiele

### Rohstoffe:

Dow 7C06:
   PP-BC, MFI 1,5 g/10 min, nicht nucleiert, Biegemodul 1280 MPa, Kristallitschmelzpunkt 164 °C (Dow Chemical)
Dow Inspire 404.01:
   Polypropylen, MFI 3 g/10 min, Biegemodul 2068 MPa, nucleiert (mit einem polymeren Nucleierungsmittels entsprechend der US 2003/195300 A1), Kristallitschmelzpunkt 164 °C (Dow Chemical)
Dowlex 2032:
   PE-LLD, MFI 2,0 g/10 min, Dichte 0,9260 g/cm³, Kristallitschmelzpunkt 124 °C (Dow Chemical)
Remafingelb HG AE 30
   PP-Farbmasterbatch mit transluzentem Pigment (Clariant Masterbatches
Dehesive 914:
   Vinylpolydimethylsiloxan (Wacker Silicones)
Crosslinker V24:
   Methylhydrogenpolysiloxan (Wacker Silicones)
Catalyst OL:
   Platin-Katalysator in Polydimethylsiloxan (Wacker Silicones)
SL 6670:
   Vinylpolydimethylsiloxan mit Platin-Katalysator (GE Silicones)
SS 4300 C:
   Methylhydrogenpolysiloxan (GE Silicones)

### Beispiel 1

Ein dreischichtiger Folieträger wird auf einer Einschneckencoextrusionsanlage mit Flachdüse mit flexibler Düsenlippe coextrudiert, gefolgt von Chillrollstation und einer einstufigen Kurzspaltreckanlage. Die (Kern-)Folie besteht aus 99 Gew.-% Inspire D 404.01 und 1 Gew.-% Remafingelb HG AE 30, die beiden äußeren Coextrusionsschichten zu 70 Gew.-% aus Dowlex 2032 und 30 Gew.-% aus Dow 7C06. Die Düsentemperatur beträgt 235 °C. Chillroll-Temperaturen und Reckwalzen-Temperaturen werden so eingestellt, dass die Kristallinität des Folientägers vor und nach dem Reckvorgang so hoch wie möglich wird. Das Reckverhältnis beträgt 1:10.

### Folieneigenschaften:

| | |
|---|---|
| Trägerdicke nach Reckung | 80 µm |
| Dicke der Basisschicht | 70 µm |
| Dicke der Coextrusionsschichten je | 5 µm |
| Spannung bei 1 %-Dehnung | 65 N/mm² |
| Zugfestigkeit | 305 N/mm² |
| Bruchdehnung | 8% |
| Weiterreißwiderstand | 410 N/mm |

Der Folienträger wird beidseitig coronavorbehandelt, mit einem Mehrfachwalzenauftragswerk mit einer Mischung aus 96,5 Gew.-Teilen Dehesive 914, 2,5 Gew.-Teilen Crosslinker V24 und 1 Gew.-Teil Catalyst OL beschichtet, welche anschließen in einem Wärmekanal ausgehärtet wird. Der erhaltene Liner ist hochtransparent und von gelber Farbe.

Der Klebstoff wird aus 42 Gew.-% SIS-Elastomer, 20 Gew.-% Pentaerythritester des hydrierten Kolophoniums, 37 Gew.-% eines C₅-Kohlenwasserstoffharzes mit einem R&B-Wert von 85 °C und 1 Gew.-% Antioxidants Irganox® 1010 in der Schmelze gemischt und bei 150 °C mit einer Düse auf ein Trennpapier mit 50 g/m² aufgetragen und dann auf den Liner durch Kaschierung übertragen. Anschließend wird das Klebeband zur Mutterrolle gewickelt und geschnitten.

### Beispiel 2

Ein Folienträger wird auf einer Einschneckenextrusionsanlage mit Flachdüse mit flexibler Düsenlippe in einer Schicht hergestellt, gefolgt von Chillrollstation und einer einstufigen Kurzspaltreckanlage.

Inspire D 404.01 und Dow 7C06 werden im Verhältnis 1:1 gemischt und extrudiert. Die Düsentemperatur beträgt 235 °C. Chillroll-Temperaturen and Reckwalzen-Temperaturen werden so eingestellt, dass die Kristallinität der Folie vor und nach dem Reckvorgang so hoch wie möglich wird. Das Reckverhältnis beträgt 1:10.

### Folieneigenschaften:

| | |
|---|---|
| Trägerdicke nach Reckung | 80 µm |
| Spannung bei 1 %-Dehnung | 43 |
| Spannung bei 10 %-Dehnung | 340 |
| Zugfestigkeit | 373 N/mm² |
| Bruchdehnung | 22% |
| Weiterreißwiderstand | 520 N/mm |

Der Folienträger wird beidseitig coronavorbehandelt, mit einem Mehrfachwalzenauftragswerk mit einer Mischung aus 96,8 Gew.-Teilen SL 6670 und 3,2 Gew.-Teilen SS 4300 C beschichtet, welche anschließen in einem Wärmekanal ausgehärtet wird. Der erhaltene Liner ist perlmuttartig weiß.

Der Liner wird mit einem Acrylathotmeltklebstoff gemäß Beispiel 6 der DE101 45 229 A1 beschichtet, der Masseauftrag beträgt 100 g/m², anschließend wird eine coronavorbehandelte 10 µm dicke Polyesterfolie einkaschiert und zur Rolle gewickelt. In einem zweiten Arbeitsgang wird dieses Vormaterial abgewickelt und analog erneut beschichtet, diesmal jedoch auf der unbeschichteten Polyesterseite, dann zur Mutterrolle gewickelt und geschnitten.

### Vergleichsbeispiel 1

Die Herstellung des Folienträgers erfolgt durch Silikonisierung gemäß Beispiel 1, jedoch auf einer 35 µm dicken biaxial verstreckten Polypropylenfolie. Das Verstreckverhältnis in Maschinenrichtung beträgt 1:5 und das Verstreckverhältnis quer zur Maschinenrichtung 1:9.

### Folieneigenschaften:

| | |
|---|---|
| Trägerdicke | 35 µm |
| Spannung bei 1 %-Dehnung | 24 N/mm² |
| Zugfestigkeit | 115 N/mm² |
| Bruchdehnung | 215% |
| Weiterreißwiderstand | 90 N/mm |

Das Klebeband analog Beispiel 1 ist farblos, daher ist der Liner auf der Klebstoffschicht nicht erkennbar. Bei Applizieren in 5 mm Breite als Verschluss auf Polyethylenbeuteln kommt es bei höheren Applikationsgeschwindigkeiten zu Überdehnung. Dies führt durch Rückschrumpf im Verklebungsbereich zu Falten in den Beuteln. Gelegentlich finden Abrisse bei der Applikation statt.
Diese Probleme treten bei den Beispielen 1 und 2 nicht auf.

### Vergleichsbeispiel 2

Trennfolie auf Polyethylenbasis (76677 easy tight Farbe 94333 von Huhtamaki).

### Folieneigenschaften:

| | |
|---|---|
| Trägerdicke | 100 µm |
| Spannung bei 1 %-Dehnung | 12 N/mm² |
| Spannung bei 10 %-Dehnung | 29 N/mm² |
| Zugfestigkeit | 51 N/mm² |
| Bruchdehnung | 800% |
| Weiterreißwiderstand | 1200 N/mm |

Die Herstellung des Klebebandes erfolgt gemäß Beispiel 2, wobei die Trennfolie durch die Schmelze verformt wird und bei Maschinenhalt durch Schmelzen der Folie an der Düse abriss.

### Vergleichsbeispiel 3

Die Folie wird analog Beispiel 2 hergestellt, jedoch als Rohstoff nur Dow 7C06 eingesetzt und das Reckverhältnis auf 1:6,1 reduziert. Diese Folie entspricht dem Träger eines üblichen Strappingklebebandes.

### Folieneigenschaften:

| | |
|---|---|
| Trägerdicke nach Reckung | 80 µm |
| Zugfestigkeit | 247 N/mm² |
| Spannung bei 1 %-Dehnung | 19 N/mm² |
| Spannung bei 10 %-Dehnung | 142 N/mm² |
| Bruchdehnung | 27% |
| Weiterreißwiderstand | 170 N/mm |
| Farbe | farblos, leicht trübe |

## Patentansprüche

1. Verwendung eines Liners zur Eindeckung der Klebeschicht eines ein- oder doppelseitig klebenden Klebebands, Klebebandstanzlings oder Etiketts, wobei der Liner eine Folie umfasst, die ein in Längsrichtung mit einem Reckverhältnis von mindestens 1:8 verstrecktes Polypropylen mit einem Biegemodul (**gemessen nach ASTM 790 A**) von mindestens 1400, vorzugsweise mindestens 2000 MPa enthält, wobei auf mindestens einer der beiden außen liegenden Seiten der Folie eine Releasebeschichtung aufgebracht ist.

2. Verwendung nach Anspruch 1,
**dadurch gekennzeichnet, dass**
die Folie
• ein Reckverhältnis von mindestens 1:9,5,
• in Längsrichtung eine Zugfestigkeit **(nach DIN 53455-7-5)** von mindestens 300, vorzugsweise mindestens 350 N/mm² in Längsrichtung,
• in Längsrichtung eine Spannung **(nach DIN 53455-7-5)** bei 1 %-Dehnung von mindestens 20, vorzugsweise mindestens 40 N/mm² und/oder eine Spannung **(nach DIN 53455-7-5)** bei 10 %-Dehnung von mindestens 250, vorzugsweise mindestens 300 N/mm² aufweist.

3. Verwendung nach Anspruch 1 oder 2,
**dadurch gekennzeichnet, dass**
die Folie nucleiert ist.

4. Verwendung nach zumindest einem der Ansprüche 1 bis 3,
**dadurch gekennzeichnet, dass**
die Folie eine Dicke zwischen 25 und 200 µm, bevorzugt zwischen 40 und 140 µm, besonders bevorzugt zwischen 50 und 90 µm aufweist.

5. Verwendung nach zumindest einem der vorherigen Ansprüche,
**dadurch gekennzeichnet, dass**
auf beiden außen liegenden Seiten der Folie je eine Releasebeschichtung aufgebracht ist, die vorzugsweise unterschiedliche Trennkräfte zu einer Klebstoffschicht aufweisen.

6. Verwendung nach zumindest einem der vorherigen Ansprüche,
**dadurch gekennzeichnet, dass**
die Folie auf mindestens einer der beiden außen liegenden Seiten eine Coextrusionsschicht aus einem Polypropylenpolymer mit einen Gehalt an olefinischem Comonomer von weniger als 2,5 Gew.-%, vorzugsweise 0 Gew.-% aufweist, wobei vorzugsweise die Coextrusionsschicht frei von Nucleierungsmittel ist und wobei gegebenenfalls die Coextrusionsschicht zwischen der Folie und der Releasebeschichtung angeordnet ist.

7. Verwendung nach zumindest einem der vorherigen Ansprüche,
**dadurch gekennzeichnet, dass**
die Folie farbig ist.

8. Verwendung nach zumindest einem der vorherigen Ansprüche,
**dadurch gekennzeichnet, dass**
die Releasebeschichtung eine Silikonschicht ist, die vorzugsweise Vinylpolydimethylsiloxan enthält.

9. Verwendung eines Liners nach Anspruch 1,
**dadurch gekennzeichnet, dass**
die Klebeschichtung auf Acrylatbasis ist.

## Claims

1. Use of a liner for lining the adhesive layer of a single-sided or double-sided adhesive tape, adhesive-tape diecut or label, wherein the liner comprises a film which comprises a polypropylene oriented in machine direction with a draw ratio of at least 1:8 and having a flexural modulus **(measured according to ASTM 790 A)** of at least 1400, preferably at least 2000 MPa, a release coating being applied on at least one of the two outer sides of the film.

2. Use according to Claim 1, **characterized in that** the film has
• a draw ratio of at least 1:9.5,
• a tensile strength **(according to DIN 53455-7-5)** in machine direction of at least 300, preferably at least 350 N/mm² in machine direction,
• in machine direction a stress **(according to DIN 53455-7-5)** at 1% extension of at least 20, preferably at least 40 N/mm² and/or a stress **(according to DIN 53455-7-5)** at 10% extension of at least 250, preferably at lest 300 N/mm².

3. Use according to Claim 1 or 2, **characterized in that** the film is nucleated.

4. Use according to at least one of Claims 1 to 3, **characterized in that** the film has a thickness of between 25 and 200 µm, preferably between 40 and 140 µm, more preferably between 50 and 90 µm.

5. Use according to at least one of the preceding claims, **characterized in that** a release coating is applied on both outer sides of the film, the release coating preferably having different release forces with respect to a layer of adhesive.

6. Use according to at least one of the preceding claims, **characterized in that** the film, on at least one of the two outer sides, has a coextrusion layer comprising a polypropylene polymer having an olefinic comonomer content of less than 2.5% by weight, preferably 0% by weight, the coextrusion layer preferably being free from nucleating agent and the coextrusion layer being disposed if desired between the film and the release coating.

7. Use according to at least one of the preceding claims, **characterized in that** the film is coloured.

8. Use according to at least one of the preceding claims, **characterized in that** the release coating is a silicone layer which preferably comprises vinylpolydimethylsiloxane.

9. Use of a liner according to Claim 1, **characterized in that** the adhesive coating is acrylate-based.

## Revendications

1. Utilisation d'une doublure pour la couverture de la couche adhésive d'une bande adhésive simple ou double face, d'une découpe de bande adhésive ou d'une étiquette, la doublure comprenant une feuille qui contient un polypropylène étiré dans la direction longitudinale à un taux d'étirement d'au moins 1:8, ayant un module de flexion (mesuré selon ASTM 790 A) d'au moins 1 400, de préférence d'au moins 2 000 MPa, un revêtement antiadhésif étant appliqué sur au moins un des deux côtés extérieurs de la feuille.

2. Utilisation selon la revendication 1, **caractérisée en ce que** la feuille présente
- un taux d'étirement d'au moins 1:9,5,
- dans la direction longitudinale, une résistance à la traction (selon DIN 53455-7-5) d'au moins 300, de préférence d'au moins 350 N/mm² dans la direction longitudinale,
- dans la direction longitudinale, une tension (selon DIN 53455-7-5) à un allongement de 1 % d'au moins 20, de préférence d'au moins 40 N/mm² et/ou une tension (selon DIN 53455-7-5) à un allongement de 10 % d'au moins 250, de préférence d'au moins 300 N/mm².

3. Utilisation selon la revendication 1 ou 2, **caractérisée en ce que** la feuille est nucléée.

4. Utilisation selon au moins l'une quelconque des revendications 1 à 3, **caractérisé en ce que** la feuille présente une épaisseur comprise entre 25 et 200 µm, de préférence entre 40 et 140 µm, de manière particulièrement préférée entre 50 et 90 µm.

5. Utilisation selon au moins l'une quelconque des revendications précédentes, **caractérisée en ce qu'**un revêtement antiadhésif est appliqué sur les deux côtés extérieurs de la feuille, qui présente de préférence différentes forces d'adhésion sur une couche adhésive.

6. Utilisation selon au moins l'une quelconque des revendications précédentes, **caractérisée en ce que** la feuille comprend sur au moins un des deux côtés extérieurs une couche de coextrusion en un polymère de polypropylène ayant une teneur en comonomère oléfinique de moins de 2,5 % en poids, de préférence de 0 % en poids, la couche de coextrusion étant de préférence exempte d'agent de nucléation et la couche de coextrusion étant éventuellement agencée entre la feuille et le revêtement antiadhésif.

7. Utilisation selon au moins l'une quelconque des revendications précédentes, **caractérisée en ce que** la feuille est colorée.

8. Utilisation selon au moins l'une quelconque des revendications précédentes, caractérisée en ce le revêtement antiadhésif est une couche en silicone, qui contient de préférence du vinylpolydiméthylsiloxane.

9. Utilisation d'une doublure selon la revendication 1, caractérisée en ce le revêtement adhésif est à base d'acrylate.
